# EUROPÄISCHE PATENTSCHRIFT

(11) **EP 0 788 903 B1**
(45) Veröffentlichungstag und Bekanntmachung des Hinweises auf die Patenterteilung: **20.10.1999**
(21) Anmeldenummer: 97101683.7
(22) Anmeldetag: 03.02.1997
(51) Int. Cl.: B60G 21/05

(54) **Verfahren zur Herstellung einer Verbundlenkerachse für Kraftfahrzeuge und Verbundlenkerachse**
Method for manufacturing a trailing arm twist beam axle for vehicles and twist beam axle
Procédé de fabrication d'un essieu à poutre de torsion pour véhicules à moteur et essieu à poutre de torsion

(30) Priorität: 07.02.1996 DE 19604286
(43) Veröffentlichungstag der Anmeldung: 13.08.1997
(73) Patentinhaber: BENTELER AG, D-33104 Paderborn (DE)
(72) Erfinder: Streubel, Wolfgang, 32756 Detmold (DE); Töpker, Dieter, 33100 Paderborn (DE)
(74) Vertreter: Ksoll, Peter, Dr.-Ing.

(56) Entgegenhaltungen:
- EP-A- 0 681 932
- FR-A- 2 581 594

## Beschreibung

Die Erfindung betrifft ein Verfahren zur Herstellung einer Verbundlenkerachse für Kraftfahrzeuge und eine solche Verbundlenkerachse entsprechend den im Oberbegriff der Ansprüche 1 und 5 aufgeführten Maßnahmen. Als Ausgangspunkt kann die in der EP-A-681932 beschriebene Kraftfahrzeug - Hinterachse angesehen werden, bei der die Längslenker aus Leichtmetall gegossen sein können. Die Längslenker werden mit dem Querlenker verschweißt.

Verbundlenkerachsen generell, insbesondere auch für frontgetriebene Fahrzeuge, bieten die Vorteile eines einfachen Aufbaus bei geringem Raumbedarf und guten kinematischen Eigenschaften. Der die beiden Längslenker verbindende Querlenker wirkt hierbei als Torsionsstab, so daß sich bei gleichzeitigem Einfedern eine Längslenkercharakteristik und bei wechselseitigem Einfedern eine Schräglenkercharakteristik ergibt.

Üblicherweise werden die Verbundlenkerachsen aus Stahlhalbzeugen gefertigt.

Unter Wirtschaftlichkeits- und Umweltgesichtspunkten liegt ein generelles Bestreben in der Automobilindustrie, Fahrzeuge mit möglichst geringem Kraftstoffverbrauch zu entwickeln. Weniger Verbrauch wird durch verbesserte Motoren, aber auch durch Gewichtsreduzierung der Fahrzeuge erreicht.

Im Zuge der angestrebten Leichtbauweise hat sich Aluminium bereits als eine gegenüber Stahl spezifisch leichtere Alternative bewährt. Auch bei den Fahrwerkskomponenten, die höchstbelastete Sicherheitsteile sind, kommen heute Bauteile aus Aluminium zum Einsatz.

Bekannt ist eine Verbundlenkerachse in einer Mischbauweise, deren Längslenker aus Aluminiumguß bestehen. Aus Festigkeits- und Steifigkeitsgründen wird der Querlenker in höchstfestem Stahl ausgeführt. Zur Verbindung der Längslenker mit dem Querlenker werden in die Längslenker Einsätze aus Stahl eingelassen. Die Stahleinsätze werden mit dem Aluminium zum Längslenker vergossen. Anschließend werden die Längslenker über die Stahleinsätze mit dem Querlenker verschweißt.

Nachteilig an dieser Ausführung ist der hohe Fertigungsaufwand und die damit verbundenen Mehrkosten. Darüberhinaus stellt die Schweißverbindung naturgemäß eine geometrische und metallurgische Kerbe dar, die sich ungünstig auf das Festigkeitsverhalten auswirken kann.

Der Erfindung liegt ausgehend vom Stand der Technik die Aufgabe zugrunde, ein Verfahren zur Herstellung einer Verbundlenkerachse für Kraftfahrzeuge ökonomischer zu gestalten und eine anwendungstechnisch insbesondere im Festigkeitsverhalten verbesserte Verbundlenkerachse bereitzustellen.

Die Lösung des verfahrensmäßigen Teils dieser Aufgabe besteht in den im Anspruch 1 aufgeführten Merkmalen. Die Lösung des gegenständlichen Teils der Aufgabe wird in den Merkmalen des Anspruchs 5 gesehen.

Vorteilhafte Ausgestaltungen und Weiterbildungen des erfindungsgemäßen Grundgedankens bilden Gegenstand der abhängigen Ansprüche.

Kernpunkt der Erfindung bildet die Maßnahme, die Längslenker aus Aluminium oder einer Aluminiumlegierung warm zu formen und mit den Enden des einstückig ausgebildeten Querlenkers zu verbinden. Während der Abkühlung der Längslenker kommt es zu einem natürlichen Aufschrumpfen des Aluminiums im Bereich der Enden des Querlenkers.

Die Längslenker können schmiedetechnisch oder gußtechnisch hergestellt werden. Die Verbindung mit den Enden des Querlenkers ist kraft- und formschlüssig.

Als besonders vorteilhafte Weiterbildung des erfindungsgemäßen Verfahrens wird angesehen, die Längslenker als Aluminiumgußteile auszuführen, die gießtechnisch mit den Enden des einstückig ausgebildeten Querlenkers kraft- und formschlüssig verbunden sind. Diese Vorgehensweise ist wirtschaftlich. Auch können die besonderen Eigenschaften der Gußwerkstoffe genutzt werden.

Zweckmäßig wird den Enden des Querlenkers eine den Kraft- bzw. Formschluß mit den Längslenkern erhöhende Gestaltung gegeben. Dies kann in Form von Erhebungen, Abflachungen oder Aussparungen in den Enden realisiert sein. Damit können höchste Tragfähigkeiten realisiert werden. Mindestens bereichsweise können die Längslenker und/oder der Querlenker rohrförmig ausgebildet sein. Dies trägt zur Gewichtsreduzierung bei und gewährleistet ein gutes statisches und dynamisches Lastverhalten.

Eine geeignete Oberflächenbehandlung schließt die naturgemäß vorhandene Korrosionsgefahr im Verbindungsbereich zwischen dem Querlenker und den Längslenkern, also im Übergang Aluminium/Stahl aus.

Grundsätzlich kommt für die Herstellung der Längslenker jedes Aluminiumguß- bzw. Aluminiumdruckgußverfahren in Frage. Als Schmelze ist eine Legierung aus Aluminium mit Silizium- und Magnesiumanteilen besonders gut geeignet.

Eine sehr vorteilhafte Variante wird darin gesehen, die für die Herstellung der Längslenker verwendete Schmelze zunächst beim Stranggießen kurz vor und während der Erstarrung um die Symmetrieachse - bewirkt durch ein elektromagnetisches Feld - zu rühren. Hierdurch werden isotrope feinkörnig runde Kristalle erzeugt. Dies ist die Voraussetzung dafür, daß die Schmelze bzw. daraus abgeteilte Halbzeuge bei der Weiterverformung einen thixotropen Zustand annehmen kann. Mit thixotrop ist ein quasi gelartiger Zustand zwischen fest und flüssig gemeint.

Der so behandelte Strang wird anschließend in bedarfsgerechte Abschnitte geteilt. Die Abschnitte werden dann auf eine solche Temperatur gebracht, daß sie einen thixotropen Zustand annehmen. In diesem Zustand sind die Abschnitte noch gut handhabbar und können in eine Druckgußmaschine eingelegt werden. Hier erfolgt die Verformung zum Längslenker. Unter Druck sinkt die Viskosität der Schmelze und das Material fließt in die gewünschte Form. Dabei werden die Enden des Querlenkers eingefaßt. Bei der Abkühlung der Aluminiumschmelze stellt sich dann die gewünschte form- und kraftschlüssige Verbindung der Längslenker mit dem Querlenker ein. So kann ein schweißnahtloser Übergang der Längslenker zum Querlenker erreicht werden.

Das erfindungsgemäße Verfahren ist rationell und sehr gut zu automatisieren. Die Qualität der erfindungsgemäßen Verbundlenkerachse ist gegenüber den bekannten Bauarten weiter verbessert worden.

Die Erfindung ist nachfolgend anhand eines in den Zeichnungen dargestellten Ausführungsbeispiels beschrieben. Es zeigen:
- Figur 1: in technisch generalisierter Darstellungsweise eine erfindungsgemäße Verbundlenkerachse;
- Figur 2: den Ausschnitt II der Figur 1 im Horizontalschnitt und
- Figur 3: eine Seitenansicht auf die Darstellung der Figur 2 gemäß dem Pfeil III.

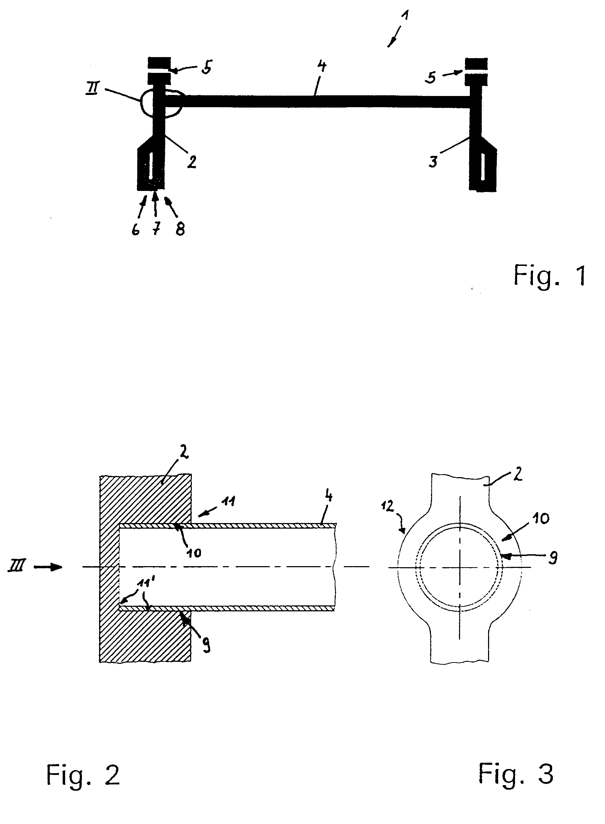

In der Figur 1 ist eine Verbundlenkerachse 1 für frontgetriebene Kraftfahrezuge schematisch dargestellt.

Die Verbundlenkerachse 1 umfaßt zwei Längslenker 2, 3 aus Aluminiumguß, die durch einen einteiligen Querlenker 4 verbunden sind. Der Querlenker 4 wirkt als Torsionsprofils und ist aus Festigkeits- und Steifigkeitsgründen aus höchstfestem Stahl.

In den Längslenkern 2, 3 sind bauteilgerecht Buchsen 5 sowie Radlager 6, Stoßdämpferaufnahme 7 und ggf. Federsitze 8 integriert.

In den Figuren 2 und 3 ist der Ausschnitt II der Figur 1 im Horizontalschnitt und in der Seitenansicht dargestellt.

Der Längslenker 2 nimmt das Ende 9 des einstückig ausgebildeten Querlenkers 4 auf. Der Längslenker 2 ist gießtechnisch mit dem Ende 9 des Querlenkers 4 verbunden. Hierbei wird der Schrumpfvorgang ausgenutzt, der sich bei der Abkühlung der Aluminiumschmelze einstellt. Damit stellt im Verbindungsbereich 10 ein kombinierter Kraft-/Formschluß ein, der eine hohe Tragfähigkeit gewährleistet. Eine Korrosionsschutzbehandlung der Verbindungsbereiche 10 bzw. der Oberfläche 11, 11' im Verbindungsbereich 10 beugt einer möglichen Korrosion vor.

Wie die Figur 3 erkennen läßt, weist der Längslenker 2 im Verbindungsbereich 10 einen an das Profil des Querlenkers 4 angepaßten bauchigen Verbindungsabschnitt 12 mit einer Geometrie auf.

Als besonderer Vorteil der erfindungsgemäßen Verbundlenkerachse 1 ist der schweißnahtlose Übergang vom Querlenker 4 auf den Längslenker 2 anzusehen. Hierdurch ergibt sich nicht nur eine Verringerung des Fertigungsaufwands, sondern auch eine Verbesserung des Festigkeitsverhaltens der Verbundlenkerachse 1.

## Patentansprüche

1. Verfahren zur Herstellung einer Verbundlenkerachse für Kraftfahrzeuge, bei welchem zwei Längslenker (2, 3) mit einem einstückig ausgebildeten Querlenker (4) verbunden werden, dadurch gekennzeichnet, daß die Längslenker (2,3) aus Aluminium oder einer Aluminiumlegierung und der Querlenker (4) aus Stahl bestehen, wobei die Längslenker (2, 3) warm geformt und bei der Abkühlung mit den Enden (9) des Querlenkers (4) kraft- und formschlüssig verbunden werden.

2. Verfahren nach Anspruch 1, **dadurch gekennzeichnet**, daß die Längslenker (2, 3) aus einer Schmelze geformt und bei der Abkühlung der Schmelze mit den Enden (9) des Querlenkers (4) verbunden werden.

3. Verfahren nach Anspruch 2, **dadurch gekennzeichnet**, daß die Längslenker (2, 3) aus einer sich mindestens im thixotropen Zustand befindlichen Schmelze geformt werden.

4. Verfahren nach einem der Ansprüche 1 bis 3, **dadurch gekennzeichnet**, daß mindestens die Verbindungsbereiche (10) zwischen dem Querlenker (4) und den Längslenkern (2, 3) bezüglich ihrer Oberflächen (11, 11') korrosionsschutzbehandelt werden.

5. Verbundlenkerachse für Kraftfahrzeuge, welche zwei durch einen einstückigen Querlenker (4) verbundene Längslenker (2, 3) aufweist, dadurch gekennzeichnet, daß die Länglslenker aus Aluminium oder einer Aluminiumlegierung und der Querlenker aus Stahl bestehen, wobei die Längslenker (2, 3) durch Warmumformung hergestellt und beim Abkühlen auf die Enden (9) des einstückigen Querlenkers (4) aufgeschrumpft sind.

6. Verbundlenkerachse nach Anspruch 5, **dadurch gekennzeichnet**, daß die Längslenker (2, 3) durch Verformung aus einer mindestens thixotropen Schmelze hergestellt sind.

7. Verbundlenkerachse nach Anspruch 5 oder 6, **dadurch gekennzeichnet**, daß die Enden (9) des Querlenkers (4) eine den Kraft/Formschluß mit den Längslenkern (2, 3) erhöhende Gestaltung aufweisen.

8. Verbundlenkerachse nach einem der Ansprüche 5 bis 7, **dadurch gekennzeichnet**, daß die Längslenker (2, 3) und/oder der Querlenker (4) mindestens bereichsweise rohrförmig ausgebildet sind.

## Claims

1. A method of producing a dead beam axle for motor vehicles, wherein two trailing arms (2, 3) are connected to a transverse control arm (4) which is constructed in one piece, characterised in that the trailing arms (2, 3) consist of aluminium or an aluminium alloy and the transverse control arm (4) consists of steel, the trailing arms (2, 3) being hot-formed and, during the cooling, being connected non-positively and positively to the ends (9) of the transverse control arm (4).

2. A method according to claim 1, characterised in that the trailing arms (2, 3) are formed from a melt and are connected to the ends (9) of the transverse control arm (4) during the cooling of the melt.

3. A method according to claim 2, characterised in that the trailing arms (2, 3) are formed from a melt which is at least in the thixotropic state.

4. A method according to any one of claims 1 to 3, characterised in that at least the connection zones (10) between the transverse control arm (4) and the trailing arms (2, 3) are treated so as to be corrosion-protected in respect of their surfaces (11, 11').

5. A dead beam axle for motor vehicles, comprising two trailing arms (2, 3) connected by a one-piece transverse control arm (4), characterised in that the trailing arms consist of aluminium or an aluminium alloy and the transverse control arm consists of steel, the trailing arms (2, 3) being produced by hot-forming and being shrunk on to the ends (9) of the one-piece transverse control arm (4) during the cooling.

6. A dead beam axle according to claim 5, characterised in that the trailing arms (2, 3) are produced by forming from an at least thixotropic melt.

7. A dead beam axle according to claim 5 or 6, characterised in that the ends (9) of the transverse control arm (4) have a configuration which increases the non-positive/positive connection to the trailing arms (2, 3).

8. A dead beam axle according to any one of claims 5 to 7, characterised in that the trailing arms (2, 3) and/or the transverse control arm (4) are of tubular construction at least in certain zones.

## Revendications

1. Procédé de fabrication d'un essieu composite à bras oscillants pour véhicules à moteur, dans lequel deux bras oscillants longitudinaux (2, 3) sont reliés à un bras oscillant transversal (4) de réalisation monobloc, caractérisé par le fait que les bras oscillants longitudinaux (2, 3) consistent en de l'aluminium ou en un alliage d'aluminium, et le bras oscillant transversal (4) consiste en de l'acier, les bras oscillants longitudinaux (2, 3) étant formés à chaud et étant reliés aux extrémités (9) du bras oscillant transversal (4), lors du refroidissement, mécaniquement et par concordance de formes.

2. Procédé selon la revendication 1, caractérisé par le fait que les bras oscillants longitudinaux (2, 3) sont formés à partir d'une masse en fusion, et sont reliés aux extrémités (9) du bras oscillant transversal (4) lors du refroidissement de ladite masse en fusion.

3. Procédé selon la revendication 2, caractérisé par le fait que les bras oscillants longitudinaux (2, 3) sont formés à partir d'une masse en fusion se trouvant au moins à l'état thixotropique.

4. Procédé selon l'une des revendications 1 à 3, caractérisé par le fait qu'au moins les zones de liaison (10), entre le bras oscillant transversal (4) et les bras oscillants longitudinaux (2, 3), subissent un traitement de protection anticorrosion concernant leurs surfaces (11, 11').

5. Essieu composite à bras oscillants pour véhicules à moteur, comportant deux bras oscillants longitudinaux (2, 3) reliés par un bras oscillant transversal monobloc (4), caractérisé par le fait que les bras oscillants longitudinaux consistent en de l'aluminium ou en un alliage d'aluminium, et le bras oscillant transversal consiste en de l'acier, les bras oscillants longitudinaux (2, 3) étant produits par déformation à chaud et étant frettés à chaud, lors du refroidissement, sur les extrémités (9) du bras oscillant transversal monobloc (4).

6. Essieu composite à bras oscillants, selon la revendication 5, caractérisé par le fait que les bras oscillants longitudinaux (2, 3) sont produits par déformation à partir d'une masse en fusion au moins thixotropique.

7. Essieu composite à bras oscillants, selon la revendication 5 ou 6, caractérisé par le fait que les extrémités (9) du bras oscillant transversal (4) présentent une configuration accroissant la solidarisation mécanique/par concordance de formes avec les bras oscillants longitudinaux (2, 3).

8. Essieu composite à bras oscillants, selon l'une des revendications 5 à 7, caractérisé par le fait que les bras oscillants longitudinaux (2, 3) et/ou le bras oscillant transversal (4) est (sont) de réalisation tubulaire au moins par zones.
